# FASCICULE DE BREVET EUROPEEN

(11) **EP 3 289 933 B1**
(45) Date de publication et mention de la délivrance du brevet: **24.06.2020**
(21) Numéro de dépôt: 17185019.1
(22) Date de dépôt: 04.08.2017
(51) Int. Cl.: A47J 27/00, A47J 27/62, G05D 23/19

(54) **PROCÉDÉ DE COMMANDE D'UN APPAREIL DE CUISSON DE GRAINES ET APPAREIL DE CUISSON POUR LA MISE EN OEUVRE D'UN TEL PROCÉDÉ**
STEUERVERFAHREN EINES KOCHGERÄTS FÜR GETREIDE, UND KOCHGERÄT ZUR UMSETZUNG DIESES VERFAHRENS
METHOD FOR CONTROLLING A GRAIN-COOKING APPARATUS AND COOKING APPARATUS FOR CARRYING OUT SUCH A METHOD

(30) Priorité: 30.08.2016 FR 1658056
(43) Date de publication de la demande: 07.03.2018
(73) Titulaire: SEB S.A., 69130 Ecully (FR)
(72) Inventeur: GOYON, Annabelle, 21120 MARCILLY-SUR-TILLE (FR); TORELLI, Stéphanie, 21490 BRETIGNY (FR)
(74) Mandataire: Bourrières, Patrice

(56) Documents cités:
- FR-A1- 2 996 986
- FR-A1- 3 028 720
- JP-A- 2000 308 571
- JP-A- 2004 321 215
- US-A1- 2011 003 048

## Description

La présente invention concerne un procédé de commande d'un appareil de cuisson et un appareil de cuisson pour la mise en œuvre d'un tel procédé. Le procédé selon l'invention est particulièrement adapté pour la cuisson de graines telles que des céréales par exemple du blé, orge, sarrasin, quinoa, millet, ou des légumineuses par exemple des lentilles, soja, pois chiches, haricots rouges, haricots blancs, flageolets, fèves.

Selon l'art antérieur, le protocole de cuisson traditionnel de certaines légumineuses, notamment soja, haricots et pois chiches, consiste à faire tremper pendant environ 12h certaines légumineuses dans l'eau froide. Les légumineuses sont ensuite rincées puis cuites dans une eau en ébullition pour une durée de 1h30-2h. Ce protocole est identique pour certaines céréales ayant un tégument très résistant comme par exemple le blé et l'orge. Les documents FR3028720A1 et FR2996986A1 décrivent un procédé de commande d'un appareil de cuisson.

Certaines légumineuses de petites tailles, comme les lentilles ou les pois cassés, peuvent être cuites de manière plus rapide en 30 à 45 min. En effet, leur petite taille permet une réhydratation rapide.

Par ailleurs, le débordement fréquent des cuissons de légumineuses est lié au pouvoir moussant des protéines de légumineuses. Ces propriétés fonctionnelles sont fréquemment exploitées par l'industrie agro-alimentaire. A domicile ces propriétés représentent plus un inconvénient qu'un atout.

Le problème technique que se propose de résoudre l'invention est de proposer différentes textures de graines.

Selon l'invention, ce problème technique est résolu par un procédé de commande d'un appareil de cuisson de graines comprenant un boitier fermé par un couvercle, le boitier étant équipé d'un élément chauffant principal, d'une cuve placée dans le boitier, d'un élément chauffant le bord supérieur de la cuve, d'un élément chauffant le couvercle, d'un premier capteur de température situé à proximité du fond de la cuve et d'un deuxième capteur de température placé dans le couvercle, le procédé étant caractérisé en ce qu'il comprend :
- Une étape de trempage comprenant une première phase pendant laquelle les éléments chauffants sont commandés pour maintenir pendant une durée comprise entre 15min et 80min une température de consigne comprise entre 50 et 80°C à l'intérieur de la cuve ;
- Une étape de chauffage démarrant à l'issue de la durée déterminée de trempage pendant laquelle les éléments chauffants sont commandés pour atteindre une température de consigne comprise entre 85°C et 99°C à l'intérieur de la cuve ;
- Une étape de cuisson démarrant dès que la température de consigne est atteinte pendant laquelle les éléments chauffants sont commandés pour maintenir la température de consigne à l'intérieur de la cuve pendant une durée déterminée comprise entre 25 et 100 min.

Selon une autre variante de réalisation, l'étape de trempage comprend une deuxième phase de décontamination pendant laquelle les éléments chauffants sont commandés pour maintenir une température de consigne de 100°C à l'intérieur de la cuve pendant quelques minutes, la phase décontamination précédant la phase de trempage.

Selon une autre variante de réalisation, le ratio masse d'eau/masse de graines à cuire introduites dans la cuve est compris entre 1.16 et 2.5.

Selon une autre variante de réalisation, le procédé comprend à l'issue de l'étape de trempage une étape de drainage de l'eau de trempage et une étape de remplissage de la cuve avec une quantité déterminée d'eau.

D'autres particularités et avantages de la présente invention apparaîtront dans la description ci-après de modes de réalisation donnés à titre d'exemples non limitatifs et illustrés par les dessins mis en annexe dans lesquels :

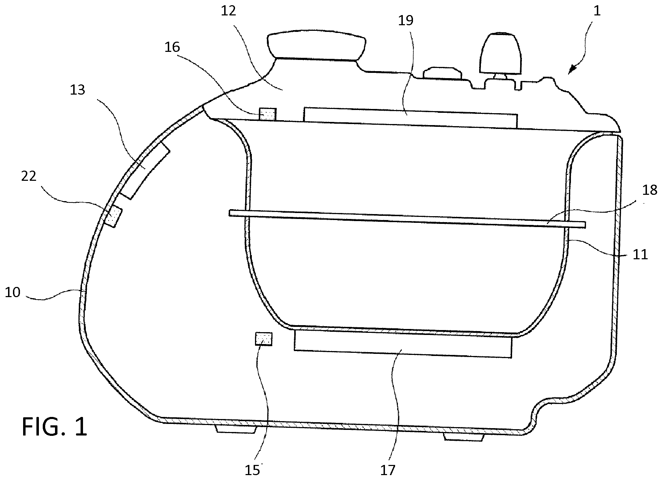

La figure 1 est une vue schématique d'un appareil de cuisson permettant de mettre en œuvre le procédé selon l'invention.

Dans la suite de la description, on désignera par graines, des légumineuses ou des céréales comestibles telles que blé, orge, sarrasin, quinoa, millet, lentille, soja, pois chiches, haricots, riz ou un mélange de ces graines. Un appareil de cuisson apte à mettre en œuvre le procédé selon l'invention va à présent être décrit en référence à la figure 1.

Selon l'invention, l'appareil de cuisson 1 comprend un corps principal 10 ou boîtier comprenant un logement dans lequel est insérée une cuve 11 interne pour cuire le riz et les graines. Le boitier est équipé d'un couvercle 12 monté articulé sur le boitier 10 de telle manière que la partie supérieure du corps principal est ouverte ou fermée par le couvercle 12. Un dispositif de commande 13 assurant les opérations de contrôle de l'appareil de cuisson 1 équipe également le boitier 10.

L'appareil de cuisson 1 comprend également un premier capteur 15 pour détecter la température de la partie inférieure de la cuve 11. Le premier capteur 15 est monté à proximité du fond de la cuve. Un second capteur 16 pour détecter la température de la face interne du couvercle 12 est monté sur le couvercle. Les premier et deuxième capteurs sont connectés au dispositif de commande 13.

Les moyens de chauffage de l'appareil de cuisson 1 comprennent un élément chauffant dit principal 17 fournissant une source de chauffage de manière à provoquer l'opération de trempage/cuisson et l'opération de maintien au chaud dans la cuve 11 de l'appareil de cuisson, un élément 18 chauffant le bord supérieur de la cuve 11 et un élément 19 chauffant la face interne du couvercle 12.

Le boitier 10 ainsi que le couvercle sont par exemple en plastique.

Le dispositif de commande 13 est installé sur un côté intérieur du corps principal 10. Le dispositif de commande 13 est également connecté à des boutons de commande 22 permettant à un utilisateur de programmer l'appareil de cuisson.

Par ailleurs, le dispositif de commande 13 est connecté aux éléments chauffants 17, 18, 19 pour les activer ou les désactiver en fonction d'une part d'un programme de cuisson choisi par l'utilisateur et d'autre part des mesures de température relevées par les deux capteurs 15, 16.

Selon une variante de réalisation, l'élément chauffant principal 17 est de type induction alors que l'élément 18 chauffant le bord supérieur de la cuve 11 et l'élément 19 chauffant le couvercle 12 sont de type résistif.

Le procédé de commande de l'appareil de cuisson 1 selon l'invention permet la cuisson de légumineuses en moins de 3h incluant le temps de trempage indispensable pour obtenir des qualités organoleptiques et nutritionnelles acceptables.

Selon les tests réalisés par la demanderesse, un trempage des graines dans de l'eau chaude (température supérieure à 60°C) permet de réduire considérablement la durée de trempage totale.

Par ailleurs, selon une variante de réalisation, il est possible de procéder à la décontamination des graines lors du trempage si la température de trempage est amenée à 100°C.

Ce trempage à chaud permet d'accélérer la réhydratation des graines en provoquant la gélatinisation de l'amidon. La durée de trempage à chaud dépend de l'épaisseur du tégument de la graine à cuire. Cette étape permet la destruction partielle de la cellulose constitutive des parois des graines et permet également la gélatinisation de l'amidon pour une bonne hydratation.

L'étape de trempage a une durée limitée. En effet, une phase de trempage trop longue altère les caractéristiques organoleptiques des graines. Si le trempage se poursuit pendant un temps trop long, le niveau des graines dans la cuve passe au dessus du niveau d'eau, ce qui signifie que les graines situées sur le haut de la cuve sont à l'air libre et se dessèchent rapidement alors que les graines en fond de cuve sont toujours en contact avec l'eau et continuent d'absorber l'eau résiduelle. Lors du passage en phase de cuisson, il se peut qu'il n'y ait plus assez d'eau pour cuire les graines du dessus alors que celles en fond de cuve seront beaucoup plus hydratées. La cuisson sera alors très hétérogène au sein de la cuve.

Selon une variante de réalisation du procédé selon l'invention, l'étape de trempage comprend une phase de trempage proprement dite et de façon optionnelle une phase de décontamination. La phase de décontamination a lieu de préférence avant la phase de trempage.

La phase de trempage est réalisée à une température comprise entre 50 et 80°C pendant une durée comprise entre 15min et 80min. La durée de cette étape dépend notamment de l'épaisseur du tégument de la graine à cuire et également de la quantité de graines. La durée de trempage dépend également du type de texture que l'on souhaite obtenir en fin de cuisson des graines.

En effet, la plage de température de trempage selon l'invention correspond à la température de gélatinisation de l'amidon permettant, entre autre, une meilleure absorption d'eau et influe également sur la fermeté du grain cuit. Cette phase de trempage permet de modifier la structure des complexes d'amidon et ainsi d'augmenter leur température de fusion pendant la phase de cuisson et donc de limiter leur hydrolyse pendant la phase de cuisson.

En modulant la durée de trempage des graines, il est possible d'adapter la texture de la graine en fin de cuisson. Cette modulation de la texture favorise la consommation de graines.

La phase de décontamination des graines est réalisée à 100°C. La durée de la phase de décontamination dépend de la quantité et du type de graine à cuire. En moyenne, une phase de décontamination de 10min à 100°C permet de détruire toutes les bactéries présentes.

Selon une variante de réalisation, le procédé selon l'invention peut comprendre également une étape de drainage à l'issue de la phase de trempage. Au cours du trempage, certains composés antinutritionnels de nature protéique ou non protéique sont thermosensibles et seront donc éliminés lors de la cuisson. D'autres composés antinutritionnels sont solubles dans l'eau de trempage et pourront donc être éliminés grâce à l'étape de drainage réalisée dans le procédé selon l'invention. La plupart des facteurs antinutritionnels alimentaires ont un impact sur le système digestif, comme l'inhibition d'enzymes digestives (inhibiteurs de la protéase, par exemple), l'altération des fonctions d'hydrolyse, la formation de complexes insolubles qui ne peuvent être adsorbés, la diminution de la biodisponibilité de certains nutriments (phytates, polyphénols), et l'augmentation de la production de gaz dans le côlon (a-galactosides).

L'acide phytique, myo-inositol-1,2,3,4,5, 6,-hexakis (dihydrogen-phosphate) est soluble et est l'un des facteurs antinutritionnels les plus répandus dans les légumineuses. Aux valeurs de pH rencontrées dans les aliments et dans le tractus gastro-intestinal, l'acide phytique sera fortement chargé négativement et peut se lier à des espèces chargées positivement, telles que des cations ou les protéines. Plusieurs études ont démontré une diminution de la dégradation enzymatique des protéines en présence d'acide phytique. Cette diminution a été liée à l'inhibition des enzymes digestives telles que la protéase, la trypsine et la pepsine. D'autres chercheurs ont utilisé la solubilité de l'azote en tant que critère d'évaluation de la digestibilité et ont montré que, pendant l'hydrolyse des protéines, l'acide phytique forme des complexes peptide-phytate insolubles, ce qui réduit la production d'azote soluble et donc diminue le taux d'hydrolyse.

D'autres études ont montré que la molécule de phytate est chargée négativement au pH physiologique et peut se lier avec des cations importants sur le plan nutritionnel comme les cations essentiels divalents Fe²⁺, Zn²⁺, Mg²⁺ et Ca²⁺, etc., et former des complexes insolubles, ce qui rend les minéraux indisponibles pour l'absorption. L'acide phytique forme également des complexes avec l'amidon et empêche sa digestion.

En fin de trempage, avant la montée en température amorçant la cuisson, l'eau de trempage résiduelle est drainée, ce qui élimine les facteurs antinutritionnels solubles. Par la suite, de l'eau claire est ajoutée pour la phase de cuisson. Le drainage peut être réalisé manuellement, à l'aide d'un égouttoir ou d'une passoire par exemple, et l'utilisateur de l'appareil ajoute ensuite de l'eau claire pour réaliser la cuisson.

Selon une autre variante de réalisation, l'appareil comprend un dispositif de drainage qui permet d'éliminer l'eau de trempage et de collecter l'amidon soluble, ainsi qu'un réservoir d'eau claire qui réalimente la cuve de cuisson pour la phase de cuisson.

Le dispositif de drainage (non représenté) comprend par exemple un orifice pratique dans le fond de la cuve 11. L'orifice est obturé par une valve pilotée par le dispositif de commande 13. Un récipient est placé sous la cuve 11 afin de récolter le liquide de drainage qui s'écoule par l'orifice lorsque la valve est en position ouverte. Un filtre mécanique peut être placé au niveau de l'orifice pour empêcher le riz ou les graines d'être évacué(es) avec le liquide.

Afin de réalimenter la cuve 11 interne en eau, la réserve d'eau claire (non représentée) est par exemple positionnée au-dessus de la cuve 11 interne. Un orifice de vidage et une valve pilotée par le dispositif de commande sont réalisés dans le fond de la réserve d'eau claire.

Selon une autre variante de réalisation, la réserve d'eau claire peut être installée autour de la cuve 11 interne. Afin d'amener l'eau claire jusque dans la cuve 11 interne, une pompe d'aspiration et un conduit sont associés à la réserve d'eau claire de sorte que la pompe aspire l'eau claire de la réserve et la pousse jusque dans la cuve via le conduit.

Selon une autre variante de réalisation, l'eau claire est fournie par une source externe par exemple le réseau domestique de distribution d'eau. Selon cette variante, l'appareil de cuisson selon l'invention comprend un connecteur extérieur relié à un conduit. L'extrémité libre du conduit est placée dans la cuve 11 interne.

Une valve pilotée est installée sur le conduit. Avant le démarrage d'un cycle de cuisson, l'utilisateur branche le réseau domestique sur le connecteur.

Pour les différentes variantes décrites ci-dessus, le drainage et le remplissage sont réalisés de façon automatique par actionnement des différentes valves pilotées par le dispositif de commande.

Le procédé de commande comprend à l'issue de l'étape de trempage une étape de cuisson. Les paramètres de cuisson (température et durée) sont déterminés en fonction du type de graines à cuire.

Le procédé de commande selon l'invention permet de réaliser le trempage et la cuisson des graines dans l'appareil de cuisson sans intervention de l'utilisateur au cours du cycle de préparation.

Pour la préparation de graines, l'utilisateur introduit dans la cuve de l'appareil de cuisson une quantité déterminée de graines et d'eau. Ces quantités sont par exemple indiquées par des niveaux identifiés sur la surface intérieure de la cuve.

Selon une variante de réalisation, le ratio masse d'eau/masse de graines est compris entre 1.16 et 2.5. Le choix du ratio dépend du type de graines à cuire mais également du type de texture souhaitée par l'utilisateur. Plus le tégument de la graine sélectionnée est épais plus le ratio est élevé. De même plus la texture de la graine cuite est ferme plus le ratio est faible.

L'étape principale du procédé de commande selon l'invention est une étape de trempage. Cette étape de trempage comprend une première phase, tout ou partie des éléments chauffants 17, 18, 19 sont activés de façon à maintenir une température à l'intérieur de la cuve 11 comprise entre 50°C et 80°C. La durée de cette phase de l'étape de trempage est comprise entre 15 et 80 min en fonction du type de graines à cuire et du type de texture souhaitée.

Lorsque l'étape de trempage comprend également une phase de décontamination des graines, la température de consigne de la phase de décontamination est voisine de 100°C. En d'autres termes, une boucle de régulation des éléments chauffants 17, 18, 19 sur le signal du premier capteur 15 de température situé dans le fond de la cuve 11 est mise en œuvre. La durée moyenne de cette étape de décontamination est limitée à 10 min avec une durée minimale de 2 min environ. Selon une autre variante de réalisation, l'élément 19 chauffant placé dans le couvercle est désactivé durant toute l'étape de trempage.

A l'issue de l'étape de trempage, c'est-à-dire après que la durée de trempage choisie par l'utilisateur soit écoulée, une étape de drainage peut être déclenchée. Comme indiqué précédemment, cette étape consiste à retirer/drainer l'eau de trempage grâce au dispositif de drainage et à ajouter la quantité d'eau claire nécessaire pour la cuisson des graines proprement dite.

L'étape de chauffage est enclenchée automatiquement. L'étape de chauffage consiste à atteindre une température de consigne déterminée comprise entre 85 et 99°C à l'intérieur de la cuve 11. Pour ce faire, le dispositif de commande 13 active tous les éléments chauffants 17, 18, 19 de l'appareil de cuisson 1 tant que le signal du deuxième capteur 16 situé dans le couvercle 12 n'indique pas la température de consigne.

Selon une variante de réalisation, une pause dans le déroulement des étapes peut être introduite avant le démarrage de l'étape de chauffage. Cette étape permet à l'utilisateur d'ajouter des ingrédients à la préparation et notamment d'autres graines qui ne nécessiteraient pas de trempage.

Pendant l'étape de chauffage, on maintient une vitesse de montée en température comprise entre 3 et 7°C/min.

En choisissant une température de cuisson inférieure à 100°C, on évite tout débordement.

Une fois la température de consigne atteinte, l'étape de cuisson débute. Selon l'invention la température de consigne de l'étape de cuisson est maintenue pendant une durée comprise entre 25min et 130min. La durée de cuisson dépend du type de graines à cuire. A titre d'exemple les temps de cuisson pour les différentes graines sont les suivants :
Pois chiches : 90 min
Blé : 90min
Orge : 50min
Lentilles : 40min
Haricots : 130min

Lors de la cuisson de graines possédant un tégument épais, un temps de pause est opéré avant l'ouverture de l'appareil de cuisson afin de laisser refroidir la préparation. En effet, la demanderesse a constaté qu'un refroidissement trop rapide des graines de ce type pouvait faire éclater les graines.

L'invention n'est pas limitée aux exemples de réalisation décrits. Ainsi, les capteurs de température peuvent être placés différemment dans l'appareil de cuisson. Par ailleurs, les signaux transmis par les capteurs peuvent être utilisés indifféremment pour réguler la température de consigne de cuisson ou de trempage.

## Revendications

1. Procédé de commande d'un appareil de cuisson (1) de graines comprenant un boitier (10) fermé par un couvercle (12), le boitier (10) étant équipé d'un élément chauffant (17) principal, d'une cuve (11) placée dans le boitier (10), d'un élément (18) chauffant le bord supérieur de la cuve (11), d'un élément (19) chauffant le couvercle (12), d'un premier capteur (15) de température situé à proximité du fond de la cuve (11) et d'un deuxième capteur (16) de température placé dans le couvercle (12), le procédé étant **caractérisé en ce qu'**il comprend :
- Une étape de trempage comprenant une première phase pendant laquelle les éléments chauffants (17, 18, 19) sont commandés pour maintenir pendant une durée comprise entre 15min et 80min une température de consigne comprise entre 50 et 80°C à l'intérieur de la cuve (11) ;
- Une étape de chauffage démarrant à l'issue de la durée déterminée de trempage pendant laquelle les éléments chauffants (17, 18, 19) sont commandés pour atteindre une température de consigne comprise entre 85°C et 99°C à l'intérieur de la cuve (11) ;
- Une étape de cuisson démarrant dès que la température de consigne est atteinte pendant laquelle les éléments chauffants (17, 18, 19) sont commandés pour maintenir la température de consigne à l'intérieur de la cuve (11) pendant une durée déterminée comprise entre 25 et 100 min.

2. Procédé de commande d'un appareil de cuisson selon la revendication 1, **caractérisé en ce que** l'étape de trempage comprend une deuxième phase de décontamination pendant laquelle les éléments chauffants (17, 18, 19) sont commandés pour maintenir une température de consigne de 100°C à l'intérieur de la cuve (11) pendant quelques minutes, la phase décontamination précédant la phase de trempage.

3. Procédé de commande d'un appareil de cuisson selon la revendication 1 ou 2, **caractérisé en ce que** le ratio masse d'eau/masse de graines à cuire introduites dans la cuve est compris entre 1.16 et 2.5.

4. Procédé de commande d'un appareil de cuisson selon l'une des revendications précédentes, **caractérisé en ce qu'**il comprend à l'issue de l'étape de trempage une étape de drainage de l'eau de trempage et une étape de remplissage de la cuve avec une quantité déterminée d'eau.

## Patentansprüche

1. Steuerverfahren eines Körnergargeräts (1), das ein Gehäuse (10) umfasst, das durch einen Deckel (12) verschlossen ist, wobei das Gehäuse (10) mit einem Hauptheizelement (17), einer Wanne (11), die in dem Gehäuse (10) positioniert ist, einem Element (18), das den oberen Rand der Wanne (11) heizt, einem Element (19), das den Deckel (12) heizt, einem ersten Temperatursensor (15), der in der Nähe des Grunds der Wanne (11) liegt, und einem zweiten Temperatursensor (16), der in dem Deckel (12) platziert ist, ausgestattet ist, wobei das Verfahren **dadurch gekennzeichnet ist, dass** es Folgendes umfasst:
- einen Einweichschritt, der eine Phase umfasst, während der die Heizelemente (17, 18, 19) gesteuert werden, um eine Solltemperatur zwischen 50 und 80 °C in dem Inneren der Wanne (11) während einer Dauer zwischen 15 Min. und 80 Min. aufrechtzuerhalten;
- einen Heizschritt, der an dem Ende der festgelegten Einweichdauer beginnt, während dem die Heizelemente (17, 18, 19) gesteuert werden, um innerhalb der Wanne (11) eine Solltemperatur zu erreichen, die zwischen 85 °C und 99 °C liegt;
- einen Garschritt, der beginnt, sobald die Solltemperatur erreicht ist, während dem die Heizelemente (17, 18, 19) gesteuert werden, um die Solltemperatur in dem Inneren der Wanne (11) während einer Dauer zwischen 25 und 100 Min. aufrechtzuerhalten.

2. Steuerverfahren eines Gargeräts nach Anspruch 1, **dadurch gekennzeichnet, dass** der Einweichschritt eine zweite Dekontaminationsphase umfasst, während der die Heizelemente (17, 18, 19) gesteuert werden, um eine Solltemperatur von 100 °C in dem Inneren der Wanne (11) während einiger Minuten aufrechtzuerhalten, wobei die Dekontaminationsphase der Einweichphase vorangeht.

3. Steuerverfahren eines Gargeräts nach Anspruch 1 oder 2, **dadurch gekennzeichnet, dass** das Verhältnis der Wassermasse zu der Masse zu garender Körner, die in die Wanne eingeführt wird, zwischen 1,16 und 2,5 liegt.

4. Steuerverfahren eines Gargeräts nach einem der vorstehenden Ansprüche, **dadurch gekennzeichnet, dass** es an dem Ende des Einweichschritts einen Schritt des Ablassens des Einweichwassers und einen Schritt des Füllens der Wanne mit einer festgelegten Wassermenge umfasst.

## Claims

1. Method for controlling a grain-cooking apparatus (1) comprising a case (10) closed by a cover (12), the case (10) being provided with a main heating element (17), a tank (11) placed in the case (10), an element (18) heating the upper edge of the tank (11), an element (19) heating the cover (12), a first temperature sensor (15) located in the vicinity of the bottom of the tank (11) and a second temperature sensor (16) placed in the cover (12), the method **characterised in that** it comprises:
- A step of soaking comprising a first phase during which the heating elements (17, 18, 19) are controlled to maintain for a duration comprised between 15min and 80min a setpoint temperature comprised between 50 and 80°C inside the tank (11);
- A step of heating starting at the end of the determined duration of soaking during which the heating elements (17, 18, 19) are controlled to reach a setpoint temperature comprised between 85°C and 99°C inside the tank (11);
- A step of cooking starting as soon as the setpoint temperature is reached during which the heating elements (17, 18, 19) are controlled to maintain the setpoint temperature inside the tank (11) during a determined duration comprised between 25 and 100 min.

2. Method for controlling a cooking apparatus according to claim 1, **characterised in that** the step of soaking comprises a second phase of decontamination during which the heating elements (17, 18, 19) are controlled to maintain a setpoint temperature of 100°C inside the tank (11) for a few minutes, with the decontamination phase preceding the soaking phase.

3. Method for controlling a cooking apparatus according to claim 1 or 2, **characterised in that** the ratio of the mass of water/mass of grains to be cooked introduced into the tank is comprised between 1.16 and 2.5.

4. Method for controlling a cooking apparatus according to one of the preceding claims, **characterised in that** it comprises at the end of the soaking step and step of draining the soaking water and a step of filling the tank with a determined quantity of water.
